Europäisches Patentamt

European Patent Office

Office européen des brevets

(19)

(11) Publication number: **0 402 299**
**A1**

## (12) EUROPEAN PATENT APPLICATION

(21) Application number: **90500052.7**

(22) Date of filing: **08.06.90**

(51) Int. Cl.5: **F16B 5/00, E01F 9/01**

(30) Priority: **08.06.89 ES 8902015**
**28.05.90 ES 9001477**

(43) Date of publication of application:
**12.12.90 Bulletin 90/50**

(84) Designated Contracting States:
**DE FR GB IT NL**

(71) Applicant: **Rocamora Garcia, Jose Antonio**
**C/Pez Volador 26**
**E-28007 Madrid(ES)**

(72) Inventor: **Rocamora Garcia, Jose Antonio**
**C/Pez Volador 26**
**E-28007 Madrid(ES)**

(74) Representative: **Martinez de la Concha**
**Chamorro, Maria (ES)**
**Calle Profesor Waksman, 14**
**E-28036 Madrid(ES)**

(54) **Safe system for making up and securing panels to supports for traffic signs and other uses.**

(57) The system comprises of making up signs on the basis of superimposing panels (1) provided with means for securing to supporting posts (13), and which are very difficult to dismantle.

The means of securing are composed of some pieces which are secured to the posts (13) and to some "U" channels (4) on the sections, with the aid of plates and bolts (20) with nuts and (23), the panels (1) also being linked together with some reinforcing and locking plates (45).

The means of securing for panels (1) located in high positions comprise of a plate (38) and some plates (42) joined by bolts (43).

EP 0 402 299 A1

# SAFE SYSTEM FOR MAKING UP AND SECURING PANELS TO SUPPORTS FOR TRAFFIC SIGNS AND OTHER USES

## OBJECT OF THE INVENTION

This invention refers to a SAFE SYSTEM FOR MAKING UP AND SECURING PANELS TO SUPPORTS FOR TRAFFIC SIGNS AND OTHER USES, the object of which lies in making the whole assembly of the sign into a structure which is very difficult to dismantle.

## BACKGROUND TO THE INVENTION

Currently the panels are manufactured by using extruded aluminium sections which are normally high priced. This factor, linked to the generally isolated location of the signs, makes it necessary to make it difficult dismantle them if it is intended to avoid making it easy for them to be stolen. In fact the panels as currently assembled are very easy to dismantle since they are secured to the supports by means of a simple bolt with its corresponding nut and a pressure piece and therefore to withdraw them is as simple as slackening a nut.

Currently there are traffic signs, based on panels safely attached to the posts themselves, by means of complex safe structures. Each panel is made up of a section which allows for securing to the posts and to the next panel, by two different methods of securing. The securing of the lower panel is effected by different means from those which allow the lower panel to be secured to the next panel above and of this one in turn to the next one above. This type of sign has already been claimed in Spanish Patent 8900902 of the same applicant. The use of these two different methods of securing makes the assembly considerably more expensive with regard to materials and labour costs.

## DESCRIPTION OF THE PRESENT INVENTION

The fundamental feature of the present invention consists in the use of a sign composed by superimposing and making it up from a single type of panel which has the same means of securing.

Another of the objects of the present invention consists in the alternative use of some means of securing in the case that they are situated in high positions and difficult to reach, as for example, the top fixing of the highest panel.

Another of the objects of the present invention consists in using some reinforcing and locking plates between panels shaped at their ends like a harpoon point, with the object of aiding their extraction on the basis of a reinforcing and locking plate of the same characteristics. These plates also act as locking elements between the panels.

Another feature of the invention consists in the use of a type of securing nut which gives a greater safeness in securing the whole assembly. Specifically, securing is carried out by means of two equal nuts which have in one of their bases castellations which allow the joint advance down the bolt of the two nuts when tightening, whilst when turning the second nut in the other direction it will come off on its own, leaving the second interior nut perfectly tight and without it being possible to manipulate it. The first nut can also be manipulated with a special spanner which can be fitted to the first nut. The nuts used can also be of the type which have safety slots or grooves so that they must be manipulated with special tools.

## BRIEF DESCRIPTION OF THE DRAWINGS

The first drawing shows a sectional view of the panel composed of an internal projection in a "U" shape with its two sides finishing in some lips in a "T" shape.

The second drawing corresponds to a variation in the production of the aforementioned panel which shows two pojections in "U" shape with their ends finishing in interior lips.

The third drawing corresponds to another variation of the panel with an upper projection in a "U" shape and its ends finishing in "T".

The fourth drawing corresponds to a perspective view of one of the pieces of the means of securing.

The fifth drawing corresponds to a perspective view of another of the pieces which form the means of securing.

The sixth, seventh and eighth drawings correspond to various perspective views of the plates which are used in the means of securing.

The ninth drawing corresponds to a perspective view of another piece useable in the means of securing.

The tenth drawing corresponds to a perspective view of a inter-panel reinforcing and locking plate.

The eleventh drawing corresponds to a perspective view of a panel fixed to a post on the basis of two different means of securing.

The twelfth drawing corresponds to a sectional view of the area where the union takes place between the "U" channel of the section and one of the pieces of the securing means.

The thirteenth drawing corresponds to a perspective view of two panels joined together in superimposed form and provided with two different means of securing to the posts.

The fourteenth drawing corresponds to a sectional view of the union between one of the pieces of the means of securing and one of the channels on the panel.

The fifteenth drawing corresponds to a sectional view similar to the previous one in which the ends of the "U" channel are both finished in internal lips.

Finally the sixteenth drawing corresponds to a rear elevational view of the area of union between a panel and the supporting post.

## DETAILED DESCRIPTION OF THE INVENTION

As can be seen according to the drawings which are attached, the present invention consists of using a panel (1) with a completely smooth front area and prepared for printing, whilst the rear is fitted with one or several "U" channels

More specifically the main section (1) is made up at the rear area with a "U" channel (4), as well as some small protrusions (7) which give the section strength.

In one variation of the way of producing it, the section can have two "U" channels (4), as can be seen on the section (2) shown in the second drawing. Likewise in a second variation of the way of producing it, the section (3) has the channel (4) situated on its upper area

The "U" channels (4) have their ends based on "T" (5) or interior lip (6) terminations, irrespectively.

Both the basic section (1) and the two variations of the way of producing it, that is to say the two sections (2) and (3), show two rear projections, one upper (8) and one lower (9), which in turn are provided with "U" channels (10) and (11), the upper channel (10) with an opening in the top and the lower channel (11) with a rear opening. The upper channel (10) has at the mouth of the opening a span (12) reducing the size of the opening.

The means of securing are made up of a series pieces and plates which are themselves adjustable to the section and the supporting post (13).

The piece (14) shows a "U" channel (15) with two optional internal lips (16) with free ends and a rear notch (17). The aforementioned piece (14) shows as an option and on top a lengthwise channel (18) provided with a small window or rectangular or circular hole (19) for a bolt (20) to pass through, fitted with a rectangular prismatic shaped head (21) with corners and rounded vertical edges. Operating in conjunction with the bolt (20) a set of nuts (22), comprising of two equal nuts which have on one of their faces castellations which allow both nuts to be screwed down the bolt (20) by means of turning only the rear nut, so that once tightening has been completed and on starting to slacken of the latter nut, the interior nut remains up against and secured in its retaining position. Another type of nut can be used which is the nut (23) provided with safety slots or grooves (24) since its removal must be effected with a special tool.

The securing means can also comprise of a second piece (25) made up of a plate (26) preferably rectangular with its corresponding rectangular or circular hole (30) and a "T" shaped appendix (27) on one of its shorter sides, which has a curve (28) in it.

The piece (25) can optionally be provided with two transversal ridges (29) on its top surface, which act as stops and safety elements against the securing nuts being manipulated.

The securing means are comprised of the alternative use of three different types of plates, the plate (31) which shows a prismatic rectangular shape, the plate (32) identical to the previous one has some angled lugs (34) at its shorter ends, and the plate (33) which has its longer ends prolonged at both walls (35) which make up a "U" assembly.

The plates (31), (32) and (33) have two external rectangular holes (36) and two internal holes (37) either circular or rectangular.

The securing means also comprise of a piece (38) made up of a rectangular plate provided with a lug (39) with a central hole (40), whilst at the other end it has a double elbow(41) like a hook. This piece (38) forms part of the alternative means of securing which are located in high and difficult to reach positions. These alternative means of securing are complemented with some plates (42) provided with holes near the ends and with two threaded stems (43) with their corresponding securing nuts (44). In the union of two superimposed sections (1), (2) or (3) on fitting together their respective upper (10) and lower (11) channels, a guide is formed on which the reinforcing and locking plates (45) can be installed which at their ends take the shape of a harpoon point (46).

The "U" channels (10) and (11) have in their interior some longitudinal ridges (10') and (11') preferably triangular in section.

On the basis of the pieces described the securing of the panels to the posts is carried out in the following manner:

Once the panel (1), (2) or (3) is in its correct position, the pieces (14) are slid on to the channels (4) of the sections until the notches (17) of the aforementioned pieces (14) are resting on the posts (13). Subsequently, the plates (31), (32) or (33) are inserted into the channels (4) of the sections, according to the requirements and the characteristics of the sign, to then insert the bolts (20) with their head (21) through the rectangular holes (19) of the pieces (14) until the head (21) is included in the corresponding channel (4) at the same time through the holes (36) of the plates (31), (32) and (33), in order immediately to rotate the bolt (20) through 90°, so that its head (21) remains perpendicular to the aforementioned holes (36).

Once in this position the assembly of the two castellated nuts (22) is screwed on, turning the outer nut which will locate the inner nut in the channel (18) of the pieces (14) so that subsequently, on screwing the outer nut in the opposite direction, the aforementioned inner nut remains in its corresponding housing of the channel (18) without it being possible to manipulate it, except with an appropriate tool.

In this way the panel (1), (2) or (3) remains safely attached to the supporting posts (13), having the notches (17) of the pieces (14) tightly fitted to the sides of the supporting posts (13).

Subsequently an upper panel is positioned in such a way that its lower channel (11) is inserted into the upper channel (10) of the lower panel, both channels (10) and (11) forming a guide for locating the reinforcing and locking plates (45) which act to lock the panels (1), (2) or (3) so that they cannot separate, and which can be easily extracted as their ends are shaped like a harpoon point (46) on being hooked by others with the same characteristics. After this, the securing procedure is carried out on the basis of the steps taken previously for the first panel.

The provision of the longitudinal ridges (10') and (11') in the channels (10) and (11) allow the plates (45) to slide perfectly along the aforementioned channels (11) and (12) since they will move along them perfectly without the material seizing.

An alternative means of securing, in the case of location in an area which is difficult to reach, consists of using the piece (38) in such a way that its hook shaped end (39) is fitted into the channel (10) of the corresponding panel, and next inserting the stems (43) in the hole (40) of the lug (39), at the same time as the ends of the aforementioned stems (43) pass through the end holes of the plate (42) to make the whole assembly safe by means of the corresponding nuts (44), to the posts (13).

Another variation of the invention consists of using the pieces (25) as a means of securing on the basis of which the panels are secured to the posts (13), and it will be effected in the following manner:

Firstly, the plates (31), (32) or (33) are inserted into the channels (4) and the bolts (20) with their heads (21) into the internal holes (36) of the plates (31), (32) and (33).

Subsequently the "T" shaped appendices (27) of the pieces (25) are inserted into the channel (4) and into the end holes (36) until their holes (30) are inserted on to the bolts (20), then tightening the nuts (23) which have a safety slot or groove so that their extraction must be effected with a special tool.

In this way securing of the panels (1), (2) or (3) on the internal sides of the supporting posts (13) is achieved.

In the case that the pieces (25) and the plates (31), (32) and (33) have rectangular shaped holes (30) and (37) assembly will be carried out attaching all the pieces and finally inserting from the exterior the head (21) through the holes (30) and (37) and rotating the stem (20) through 90°, the nuts (23) will be subsequently tightened.

In the case that the pieces (11) are not provided with the channel (18) and the pieces (25) with the ridges (26), normal nuts can be used.

In the case that the pieces (14) lack lugs (16), assembly will be carried out in the following manner:

The plates (31), (32) and (33) are inserted into the "U", channels (4) with the bolts (20) inserted into their holes (37), and subsequently the bolts (20) are fitted into the holes (19) of the pieces (14), supporting the notch (17) on the sides of the post (13).

The use of any of the means of securing and that of the three panels described in the present Memorandum, can be combined perfectly well depending upon the degree of safeness with which it is desired to endow the assembly.

The plates (31), (32) and (33) in a variation of effecting assembly can be constituted only on the basis of the circular or rectangular internal holes (37), in the case that the securing pieces (14) are used.

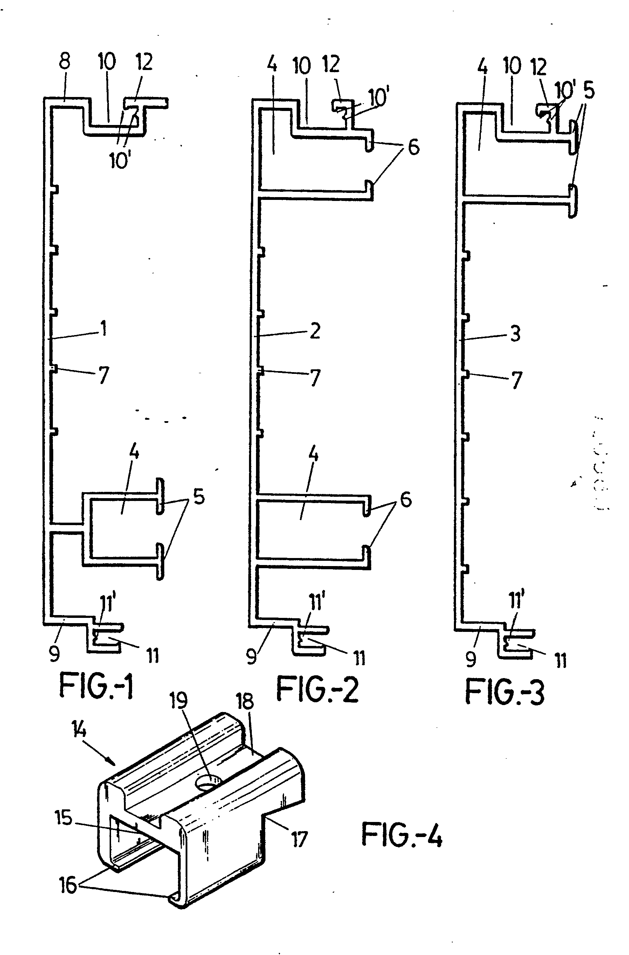

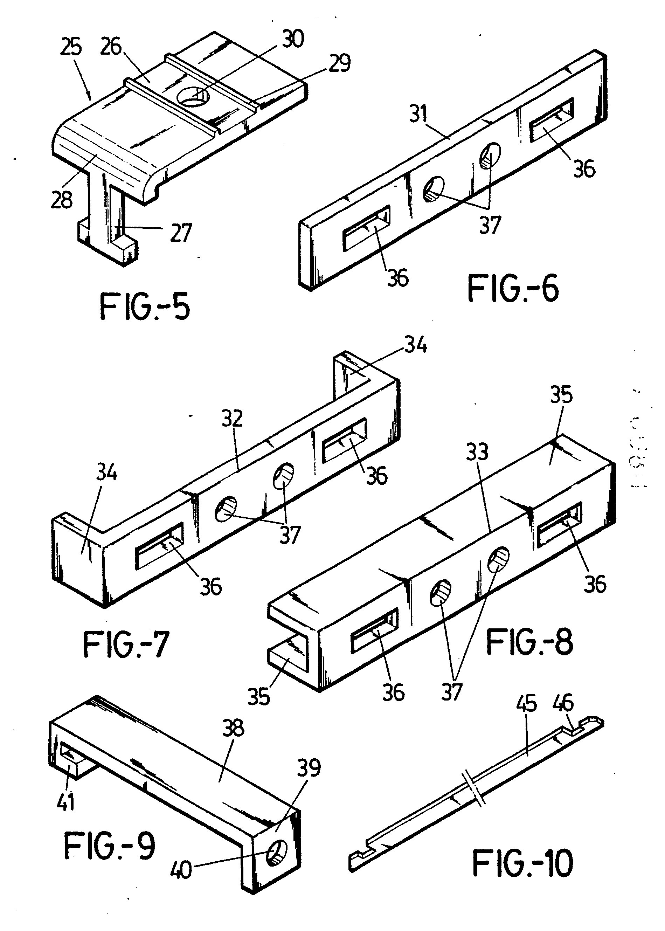

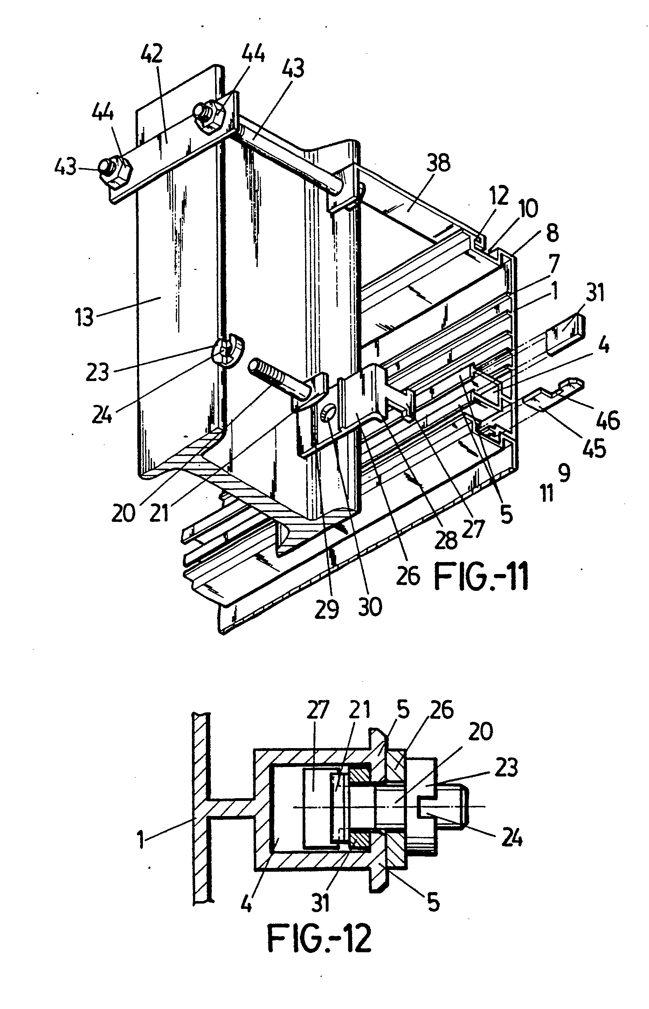

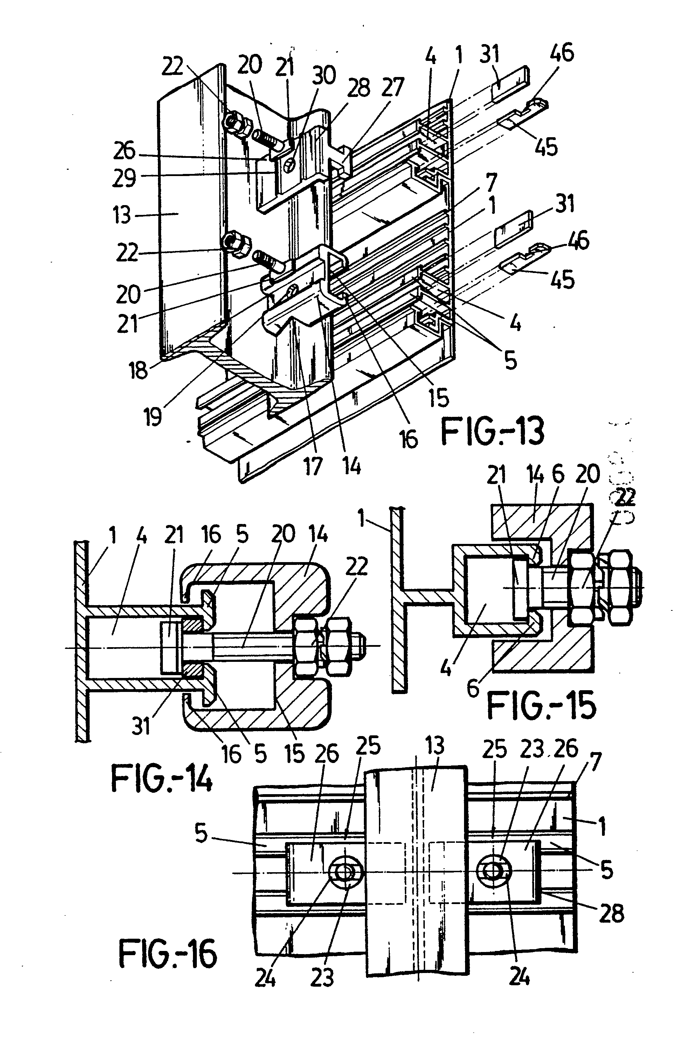

## Claims

1st.- SAFE SYSTEM FOR MAKING UP AND SECURING PANELS TO SUPPORTS FOR TRAFFIC SIGNS AND OTHER USES, which comprising of a series of vertical supporting posts (10) and on which the signs are constituted by superimposing and joining to eachother horizontal panels which are also provided with means of securing to supporting posts (13), is essentially distinguished because the panels are composed of a section (1), (2) or (3) provided with at least one housing in the form of a "U" channel (4) with its ends finished in "T" shapes (5) or in internal lips (6), on whose "U" channels (4) are fitted the means of securing to the supporting posts (13), each section comprising of an upper projection (8) and a lower one (9) which form "U" shaped channels (10) and (11) respectively, which can be linked when the sections (1), (2), (3) are superimposed, forming tracks for the housing of the reinforcing and locking plates (45), being provided in the upper channel (10) with a top opening and in the lower channel (11) with a side opening, with the upper channel (10) also having a lip (12) in the mouth of the hole.

2nd.- SAFE SYSTEM FOR MAKING UP AND SECURING PANELS TO SUPPORTS FOR TRAFFIC SIGNS AND OTHER USES, according to the first claim, distinguished because the means of securing the panels (1), (2) and (3) to the supporting posts (13), are composed of some pieces (14) forming a "U" channel (15) with optional internal lips (16) and a rear notch (17), as well as a lengthwise optional channel (18) in which there is a circular or rectangular hole (19) for the passage of threaded bolts (20) provided with a head (21) with a prismatic-rectangular shape.

3rd.- SAFE SYSTEM FOR MAKING UP AND SECURING PANELS TO SUPPORTS FOR TRAFFIC SIGNS AND OTHER USES, according to the first claim, distinguished because the means of securing the panels (1), (2) and (3) to the supporting posts (13) comprises of using some pieces (25) composed of a plate (26) with a circular or rectangular hole (30) and a "T" shaped angular appendix (27) emerging from one of the shorter sides (28) which is curved, with the plate (26) optionally being provided with two parallel ridges (29) near the hole (30).

4th.- SAFE SYSTEM FOR MAKING UP AND SECURING PANELS TO SUPPORTS FOR TRAFFIC SIGNS AND OTHER USES, according to the first, second, and third claims, distinguished because the means of securing comprise of some plates (31), (32) and (33) installed in the "U" channels (4) of the sections (1). (2) and (3), whose plates have rectangular holes in their ends for securing the "T", shaped appendices (27) of the pieces (25) and other circular or rectangular internal holes (37) for the passage of the threaded bolts (20) which pass through the holes (30) of the pieces (25), the plate (31) being of rectangular shape, the plate (32) with its shorter ends both prolonged into angled lugs (34) and the plate (33) provided with some perpendicular walls (35) along its longer edges, which make up a piece with a "U" shape.

5th.- SAFE SYSTEM FOR MAKING UP AND SECURING PANELS TO SUPPORTS FOR TRAFFIC SIGNS AND OTHER USES, according to the first claim, distinguished because the securing means corresponding to the upper areas of the highest panels (1), (2) or (3), are constituted by means of some pieces (38) provided at one of their ends with a lug (39) with a central hole (40), whilst at the other end they have a double elbow (41) in the shape of a hook which is inserted into the upper channel (10) of the sections, being attached to the posts by means of bolts (43) and nuts (44) with the aid of a plate (42) which runs across the rear part of the supporting posts (13).

6th.- SAFE SYSTEM FOR MAKING UP AND SECURING PANELS TO SUPPORTS FOR TRAFFIC SIGNS AND OTHER USES, according to the first claim, distinguished because the reinforcing and locking plates (45) have their ends shaped like a harpoon point (46).

7th.- SAFE SYSTEM FOR MAKING UP AND SECURING PANELS TO SUPPORTS FOR TRAFFIC SIGNS AND OTHER USES, according to the first, second, and third, fourth and fifth claims, distinguished because the means of securing comprise of a set of nuts (22), constituted by means of two equal nuts and provided with castellations in one of their faces, which allow the whole assembly to be screwed down the bolt (20), with the object of locating the inner nut and then by means of turning the exterior nut in the opposite direction, to leave the aforementioned inner nut immobilized.

8th.- SAFE SYSTEM FOR MAKING UP AND SECURING PANELS TO SUPPORTS FOR TRAFFIC SIGNS AND OTHER USES, according to the first, second, and third, fourth and fifth claims, distinguished because the means of securing comprise of some nuts provided with some safety slots or grooves (24) so that they can only be manipulated by means of a special tool.

9th.- SAFE SYSTEM FOR MAKING UP AND SECURING PANELS TO SUPPORTS FOR TRAFFIC SIGNS AND OTHER USES, according to the first and sixth claims, distinguished because the "U" channels (10) and (11) have in their interior longitudinal ridges (10') and (11') preferably of a triangular section.

**FIG.-1**

**FIG.-2**

**FIG.-3**

**FIG.-4**

FIG.-5

FIG.-6

FIG.-7

FIG.-8

FIG.-9

FIG.-10

FIG.-11

FIG.-12

FIG.-13

FIG.-14

FIG.-15

FIG.-16

## DOCUMENTS CONSIDERED TO BE RELEVANT

EP 90500052.7

| Category | Citation of document with indication, where appropriate, of relevant passages | Relevant to claim | CLASSIFICATION OF THE APPLICATION (Int Cl⁵) |
|---|---|---|---|
| A | <u>GB - A - 2 212 588</u><br>(UNILOCK HOLDINGS PLC)<br>* Abstract; fig. *<br>-- | 1,2,3,4 | F 16 B 5/00<br>E 01 F 9/01 |
| A | <u>US - A - 3 894 707</u><br>(HEARD)<br>* Abstract *<br>-- | 1,2,3,4,7,8 | |
| A | <u>EP - A1 - 0 169 094</u><br>(TEETEN)<br>* Abstract *<br>-- | 1 | |
| A | <u>DE - A1 - 2 626 647</u><br>(HEARD)<br>* Fig. *<br>---- | 1,2,3,4,7,8 | |

| | | | TECHNICAL FIELDS SEARCHED (Int Cl⁵) |
|---|---|---|---|
| | | | E 01 F 9/00<br>F 16 B 2/00<br>F 16 B 5/00<br>F 16 B 39/00 |

The present search report has been drawn up for all claims

| Place of search | Date of completion of the search | Examiner |
|---|---|---|
| VIENNA | 13-08-1990 | RIEMANN |